# EUROPEAN PATENT SPECIFICATION

(11) **EP 1 169 913 B1**
(45) Date of publication and mention of the grant of the patent: **25.02.2004**
(21) Application number: 01203738.8
(22) Date of filing: 30.10.1997
(51) Int. Cl.: A01J 7/02, A01J 5/017

(54) **An implement for automatically milking animals**
Vorrichtung zum automatischen Melken von Tieren
Appareil pour la traite automatique d'animaux

(30) Priority: 01.11.1996 NL 1004406
(43) Date of publication of application: 09.01.2002
(62) Divisional of application: 97954495.4
(73) Proprietor: MAASLAND N.V., 3155 PD Maasland (NL)
(72) Inventor: Van den Berg, Karel, 2971 BR Bleskensgraaf (NL); Ten Cate, Walter Enno Maria, 7631 CP Ootmarsum (NL)
(74) Representative: Corten, Maurice Jean F.M.

(56) References cited:
- EP-A- 0 385 539
- EP-A- 0 536 836

## Description

The present invention relates to an implement as described in the preamble of claim 1.

Such an implement is known from EP-A-0 385 539.

It is an object of the invention to improve the implement as described below.

According to the invention this is achieved by the features as described in claim 1.

In this manner it is possible to design the four milk hoses extending from the teat cups to the milkmeter as relatively short ones. The implement may further comprise a milk buffer vessel which is rigidly connected with the robot arm, while in the milk line between a teat cup and the milk buffer vessel there is provided a flow milkmeter which is rigidly connected with the robot arm.

For a better understanding of the invention, reference will now be made to the accompanying drawings, in which:
Figure 1 shows a milking robot including a robot arm, in which the construction according to the invention is applied;
Figure 2 shows a side view of this milking robot;
Figure 3 shows an other type of milking robot having a robot arm, in which the construction according to the invention is applied;
Figure 4 shows a cross-section in side view of the construction according to the invention in the position of non-working;
Figures 5 - 8 show the various positions taken by a housing and a teat cup during connection and milking, while
Figure 9 shows a diagram which illustrates the function of a detector constituted by one or more cameras for determining the position of the teats.

Corresponding parts in the drawings are designated by the same reference numerals.

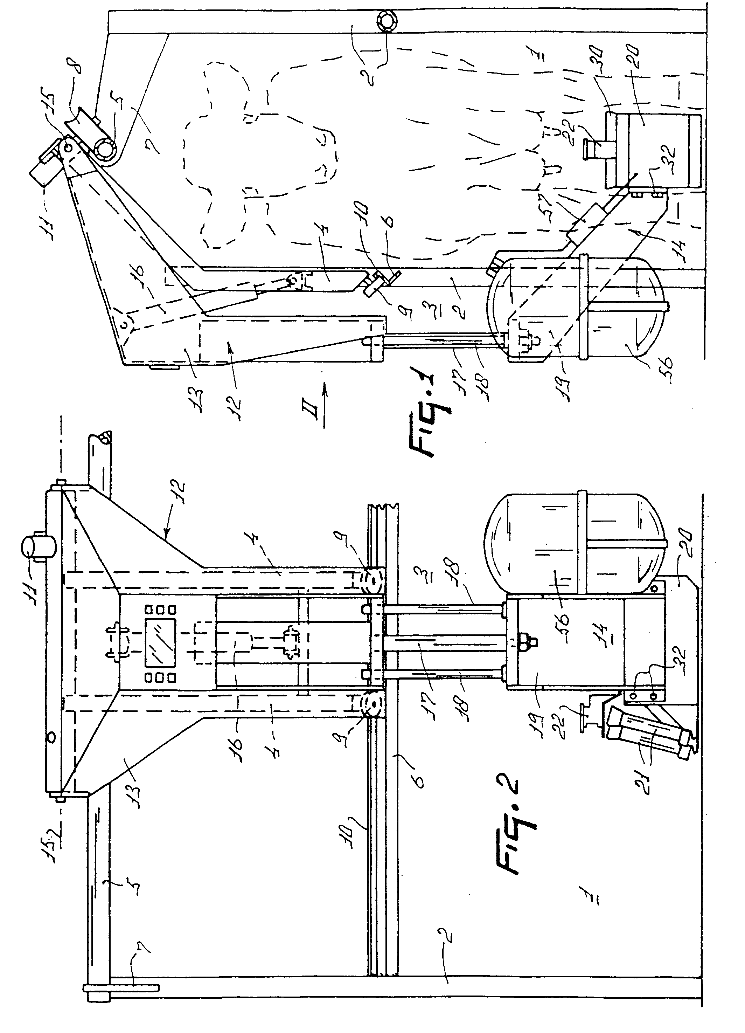

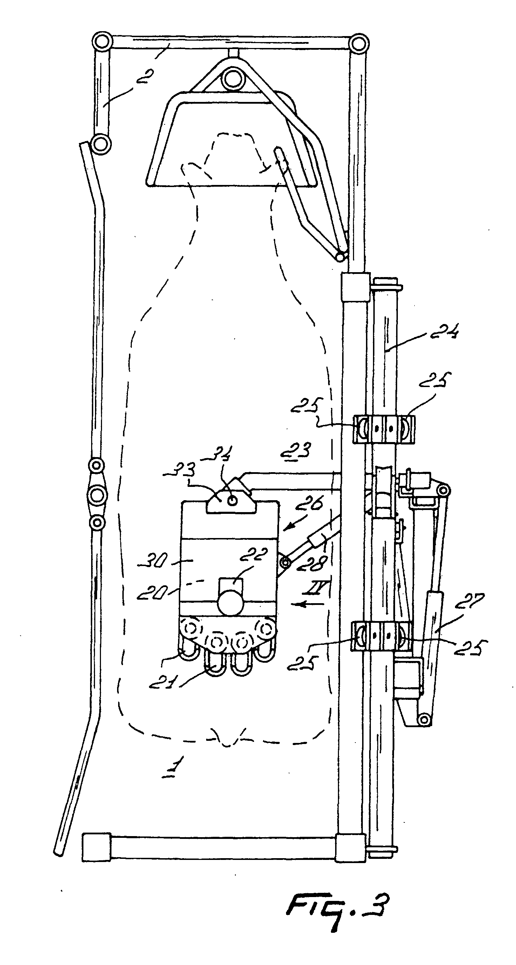

The milk box 1 shown in Figures 1 and 2 is surrounded in a customary manner by a fencing 2 and provided with a (non-shown) entrance and exit door. In the milk box and in the immediate vicinity thereof there is provided an automatic milking machine which, besides the usual milking equipment, includes a milking robot for automatically connecting teat cups to the teats of an animal to be milked which is present in the milk box, automatically milking this animal and automatically disconnecting the teat cups from the teats. The milking robot comprises a robot arm construction 3 movable in the longitudinal direction of the milk box 1. Said robot arm construction is provided with a supporting unit 4, which is movable along rails 5 and 6. In the embodiment shown, the rail 5 is tubular and is disposed in the middle above the milk box 1 in the longitudinal direction thereof by means of supports 7 attached to the fencing 2. The rail 6 is disposed approximately half-way the height of the milk box at the longitudinal side of the fencing 2, more in particular at the side where the robot arm construction is located. The rail 6 is constituted by an angle section whose abutment face, over which the supporting unit 4 can be moved, is located at an angle of approximately 45° obliquely downwards and outwards relative to the milk box 1. Both at its upper side and its under side the supporting unit 4 is provided with rollers 8 and 9. Said rollers 8 and 9 are attached to the supporting unit 4 perpendicular to each other and at an angle of approximately 45° relative to a vertical plane in the longitudinal direction of the milk box, in such a manner that the supporting unit 4 is supported on the rail 5 by means of the rollers 8 and on the rail 6 by means of the rollers 9. In order to prevent the supporting unit 4 from being pushed from the rails 5 and 6, there are provided locking means, e.g. constituted by an upright edge 10 provided on the rail 6 or additional (non-shown) rollers also attached to the supporting unit 4 and arranged diametrically opposite the rollers 8 relative to the rail 5, the rail 5 thus extending between the rollers. The supporting unit 4 is capable of being moved along the rails 5 and 6 by means of a motor 11.

The robot arm construction is furthermore provided with a sidewardly pivotable portion 12 comprising a carrier 13 extending substantially downwardly and a robot arm 14 attached thereto. The sidewardly pivotable portion 12 and consequently also the robot arm 14 are pivotable about a substantially horizontal pivotal axis 15, which is located at the upper side of the milk box or near thereto in the longitudinal direction thereof. The pivotal axis 15 and the centre line of the rail 5 are located in a substantially vertical plane.

The sideward pivotability of the portion 12 is achieved by means of an operating cylinder 16 which is disposed between said pivotable portion 12 and the supporting unit 4. As already mentioned, the sidewardly pivotable portion 12 comprises the carrier 13 and the robot arm 14. The robot arm 14 is connected movably in height to the carrier 13 by means of an operating cylinder 17. Parallel to this operating cylinder 17 there are provided one or more guide rods 18 for counteracting a rotating movement of the robot arm 14 about an axis in the longitudinal direction of the operating cylinder 17 relative to the carrier 13.

The robot arm 14 comprises a portion 19 extending obliquely downwards in the direction of the milk box and a portion 20 extending horizontally. The latter portion 20, which is adapted to act as a carrier for the teat cups 21, will be described in detail in what follows. On said portion 20 there is additionally arranged a detector 22 for determining the position of the teats.

In order to make it possible for an animal to enter the milk box 1 without damaging the milking robot, the sidewardly pivotable portion 12 of the robot arm construction is pivotable outwardly to such an extent that the robot arm 14 is located almost entirely outside the milk box 1. When an animal is present in the milk box and the teat cups 21 have to be connected, the robot arm construction 3 has first to be moved by means of the motor 11 in the longitudinal direction of the milk box to such an extent, i.e. into a position in which the robot arm 14 has pivoted entirely or almost entirely outside the milk box, that, by means of the operating cylinder 16, the robot arm 14 can be moved to underneath the animal into a position in which the detector 22 is capable of determining the position of the teats. By subsequently operating the motor 11 and the operating cylinders 16 and 17, it will be possible to connect the teat cups 21 to the teats. When adjusting a teat cup into the correct position for connecting same to a relevant teat, the pivotability of the robot arm 14 about the pivotal axis 15 may be of great advantage when the teats of the animal are directed somewhat outwardly; a situation which occurs in particular when relatively much time has elapsed since the previous milking run.

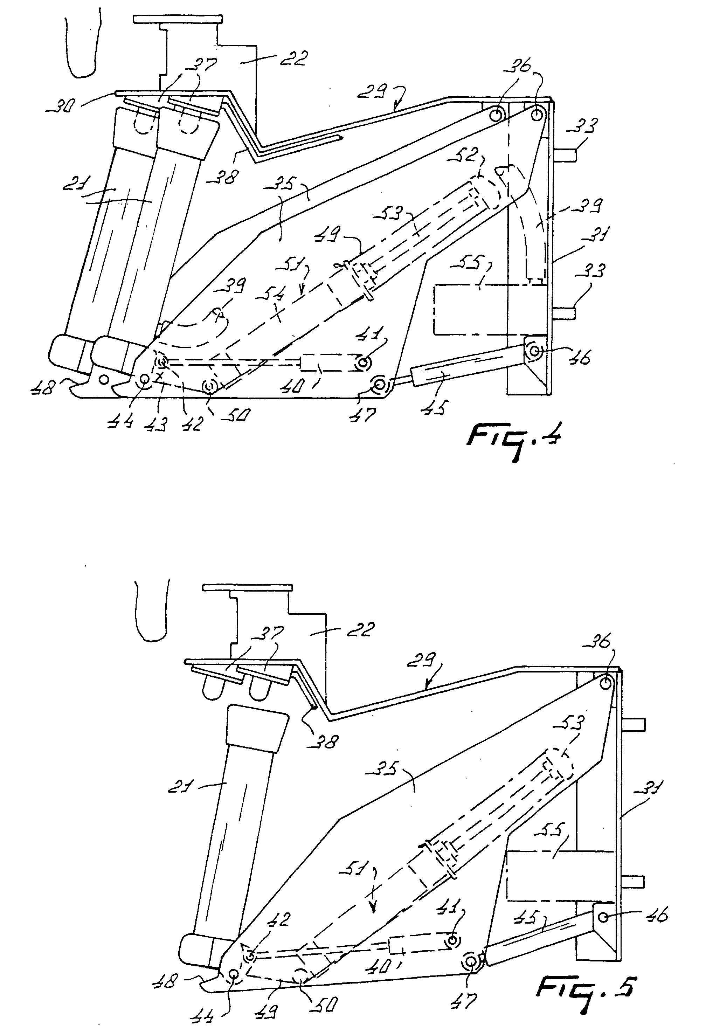

Figure 3 shows the milk box 1 including the fencing 2 and a type of robot arm construction 23 which differs from the one shown in Figures 1 and 2. Also in this case, the robot arm construction 23 is movable by means of a motor in the longitudinal direction of the milk box along a rail 24 whilst making use of rollers 25. The robot arm construction 23 is provided with a carrier, adjustable in height by means of a parallelogram construction and an operating cylinder, which carrier is movable along the aforementioned rail 24 by means of a carrier frame. At the lower side of said carrier there is attached a robot arm 26 including a portion 20 which is pivotable in a horizontal plane. By means of operating cylinders 27 and 28 said pivotable portion 20 is pivotable from a position outside the fencing 2 under the udder of an animal to be milked. The robot arm construction of Figure 3 has already been described in detail in EP-A-0 519 544; the description thereof is supposed to constitute part of the present description of the drawings. The horizontally extending portion 20 of the robot arm is equal in Figures 1 to 3 and will now be described with reference to Figures 4 to 8.

The horizontally extending robot arm portion 20 comprises a supporting element 29. This supporting element comprises at least an upper side 30 and a rear side 31. For the purpose of being incorporated in the robot arm of Figures 1 and 2, the supporting element is further provided with a side plate, said side plate being fixed to the downwardly extending robot arm portion 19 by means of bolts 32 (Figure 1). For the purpose of being incorporated in the robot arm of Figure 3, the supporting element is provided with two lugs 33, through which a vertical axis of rotation 34 (Figure 3) can be inserted, by means of which axis of rotation the horizontally extending robot arm portion 20, under control of the operating cylinder 28, is movable in a horizontal plane just under the udder of an animal to be milked.

When the teat cups 21 are in the position of non-working, it is of advantage when they are connected to a rinsing line system or are capable of being connected quickly, from this position of non-working, to such a rinsing line system. To that end, in the present embodiment, there are provided cleaning elements 37 constituted by rinsing heads underneath the upper side 30 of the supporting element 29. In the position of non-working shown in Figure 4, the teat cups 21 are connected to these rinsing heads 37 and then constitute part of a rinsing line system in which a rinsing fluid can be passed through the teat cups 21 via lines 38 and the rinsing heads 37 and can be discharged via milk hoses 39 connected to the teat cups 21. Although not visible in the drawings, the lines 38 extend partially through the robot arm and are connected to a common rinsing fluid supply line which is in connection with a rinsing fluid reservoir.

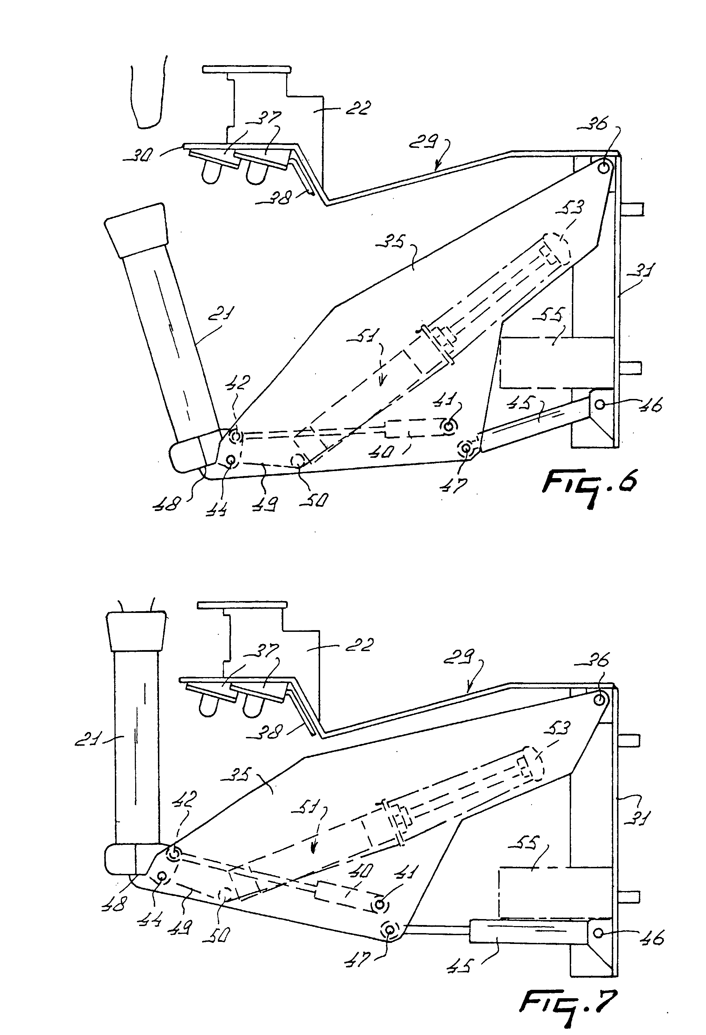

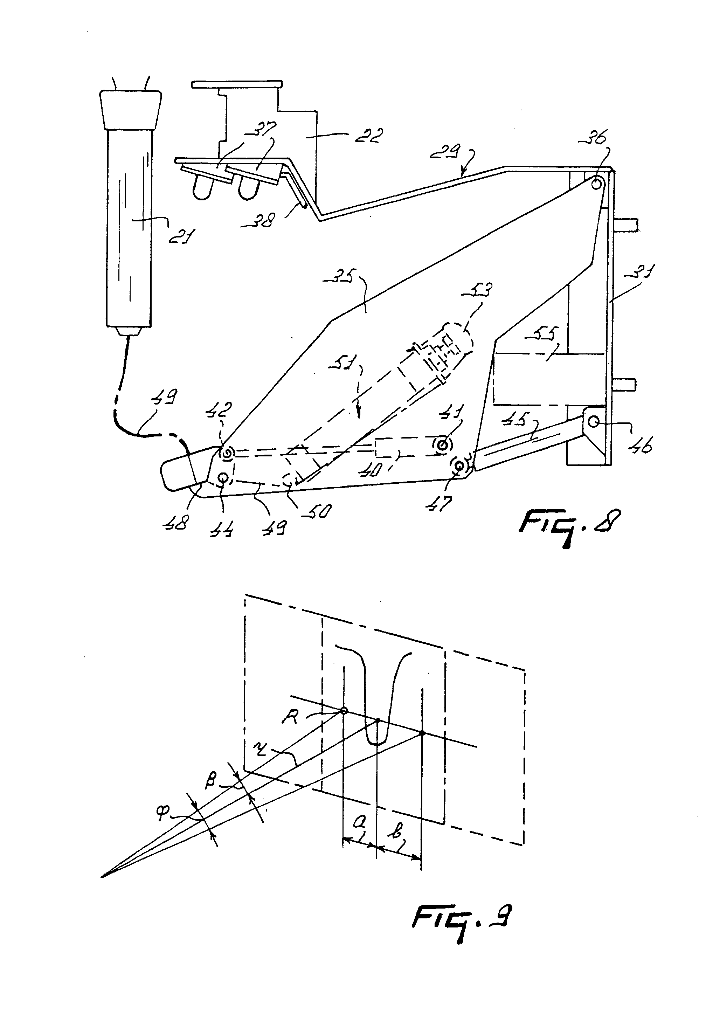

For a teat cup 21 there is provided a housing 35. Such a housing is hingeably connected, rotatably about a hinge pin 36, to the supporting element 29 and consists of two plates between which a teat cup 21 is movably disposed. A housing 35 is provided with a first operating cylinder 40 which, at one side, rotatably about a hinge pin 41, is connected with one or both plates of the housing 35 and, at the other side, rotatably about a hinge pin 42, is connected with a carrying shoe 43 for a teat cup 21. The carrying shoe 43 is further connected, rotatably about a hinge pin 44, to the housing 35. In the housing 35 there is provided a second operating cylinder 45 which, at one end, rotatably about a hinge pin 46, is connected with the supporting element 29, and, at the other end, rotatably about a hinge pin 47, is connected with one or both plates of the housing 35. In Figure 4, the operating cylinder 45 is partially pulled in, so that the housing 35 has taken its lowest position and the carrying shoe 43 has taken such a position that the teat cup carried thereby is supported by the carrying shoe 43 in an obliquely rearward direction. In this position, the condition of non-working, the open upper side of the teat cup 21 is connected to a relevant rinsing head 37. When the operating cylinder 45 is withdrawn further, the relevant housing 35, rotating about the axis 36, is moved downwards, while the teat cups 21 are disconnected from the relevant rinsing head 37. The position of the housing and the teat cup then reached is shown in Figure 5. Subsequently the operating cylinder 40 is activated, while the carrying shoe 43, together with the teat cup 21, is rotated about the axis 44 until it gets locked against a stop 48 on the housing 35. The teat cup 21 carried by the carrying shoe 43 is thus adjusted into the operative position, i.e. the position in which the open upper side of the teat cup is no longer guarded. From this position, which is represented in Figure 6, the teat cup 21 can be moved upwards. Such an upward movement is achieved by pulling out the operating cylinder 45 further than shown in Figure 4, so that the housing 35, rotating about the hinge pin 26, is pushed upwards. This situation is represented in Figure 7. When, after this upward movement, the teat cup 21 is connected to a relevant teat, the housing 35 can be moved downwards, which is achieved by activating the operating cylinder 45 in the other direction and consequently withdrawing same, in particular into the position shown in Figure 8. Although the teat cup 21, which remains connected to the teat because of the vacuum in the teat cup, is thus released from the carrying shoe 43, there remains a connection between the teat cup 21 and the housing by means of a flexible element, such as a cord, cable or string 49. Said flexible element 49 extends from the bottom side of a teat cup 21, through a carrying shoe 43 and under a roller 50, in the lower part of the housing 35 between the two side plates thereof, to a third operating cylinder 51. During the downward pivoting movement of the housing, said operating cylinder 51 must have been released, so that the flexible element, by means of which the teat cup 21 was previously pulled against the carrying shoe 43, does not hamper the release of the teat cup from the rinsing head and subsequently from the carrying shoe. In order to avoid that the operating cylinder 51 is unnecessarily long, the flexible element 49 is passed over a guide element 52 at the end of the cylinder rod 53 and is subsequently fixed to the cylinder housing 54. Figure 8 shows the position of the operating cylinder 51 after the housing 35 has been moved downwards relative to the supporting element 29 and the teat cup 21 has been released from the robot arm 14. After the milk flow from the relevant udder quarter has finished or almost finished, the teat cup has to be disconnected from the relevant teat. When the vacuum in the teat cup is removed and the operating cylinder 51 is energized, the falling teat cup is immediately pulled against the carrying shoe 43 and the position shown in Figure 6 is reached. By subsequently energizing again the operating cylinder 40, the teat cup can again be adjusted from the operative position into the position in which the open upper side of the teat cup has been brought under the relevant rinsing head 37. By subsequently partially pulling out the operating cylinder 45, it will be possible to connect the teat cup 21 again to the relevant rinsing head 37 and the position of non-working shown in Figure 4 is reached again. Figure 4 further shows how the milk hose 39 connected to a teat cup 21 extends through the housing 35. From the connection point on the teat cup 21 this milk hose extends above the operating cylinder 51 and then passes therebehind downwards to a connection point on the connecting block 55. The further milk lines connected to this connecting block are not shown in the figures. The relatively large loop in the milk hose enables to move the robot arm sufficiently far from a connected teat cup.

When upon withdrawing a teat cup to the robot arm the operating cylinder 51 is pulled out, the milk hose 39 is moved at the same time upwards and rearwards by means of the guide element 52, so that the milk hose is always in a controlled position and there is no risk of the milk hose being damaged.

When the position shown in Figure 5 is considered as the position of non-working, in the same manner as indicated in Figures 6 - 8 and as described in the foregoing, a teat cup can be connected to a teat, be disconnected therefrom after milking and be replaced into the position shown in Figure 5. From this position of non-working, if required, the teat cup can be connected to the relevant rinsing head 37 by means of the operating cylinder 45, as shown in Figure 4, and can be replaced into the position of non-working shown in Figure 5 after cleaning of the teat cup and the milk line connected thereto.

For the purpose of connecting a teat cup via an upward pivoting movement to a relevant teat, the position of the teat relative to the robot arm must be known. To that end, the detector 22 is provided. At its front upper side the detector 22 is provided with a projecting plate for the purpose of preventing the teat of an animal to be milked from touching the detector proper and contaminating the latter. Although a rotating or pivotable laser detector may be used as detector, preference is given to a pivotable camera or two cameras which are fixedly arranged at different angles, or to one fixedly arranged camera in which, via two reflecting elements, such as mirrors, arranged at a small angle relative to each other, there are obtained two pictures shifted relative to each other. In order to be able to use the detector during 24 hours, consequently also when it is dark in the milk box, these cameras are favourably designed as infrared cameras. Upon using such cameras, by means of picture analysis the contours of a teat are established relative to a specific reference point R, e.g. the middle of the image covered by a camera. For example, when a teat is located at a distance a on the right of the vertical diameter through said reference point R and, after a pivoting movement of the camera through an angle ϕ at a distance b on the left of this vertical diameter, then for the distance r of the teat relative to the camera it applies that r=(a + b)/ϕ (Figure 9). The angular position β of the teat relative to the position of the camera in a horizontal plane can e.g. be determined according to the relation a=β.r by substituting therein the above-mentioned value for r: β=aϕ/(a+b). As a result of the fact that the height h at which the robot arm is located upon determining the position of the teat may be known from the position of the operating cylinder 17, the position of a teat, expressed in cylinder coordinates (r, β, h), can permanently be kept up to date. The two pictures shifted relative to each other can also be obtained, as mentioned in the foregoing, by means of two cameras arranged at a small angle relative to each other or by means of one fixedly arranged camera via two mirrors arranged at a small angle relative to each other.

In Figure 1 there is furthermore shown a milk glass 56. In the commonly used milking implements such a milk buffer vessel functioning as a milkmeter, such as a milk glass, is fixedly arranged. However, it may be favourable to connect the milk buffer vessel rigidly with the robot arm 14, so as to obtain the advantage that four relatively short milk hoses extending from the teat cups to the milk buffer vessel are required. From the milk buffer vessel one further milk line extends to the milk tank. Instead of having a milk buffer vessel function as milkmeter, it is possible to provide so-called flow milkmeters in the milk lines between the teat cups and the milk buffer vessel. Said flow milkmeters may be of the type as described in NL-A-1002600, the text of which is supposed to have been incorporated herein. The milk buffer vessel 56 then only functions as a collecting element. One of these flow milkmeters 57 is indicated in Figure 1 by interrupted lines. Via the connecting block 55, each of these flow milkmeters is in connection with a relevant milk line 39.

## Claims

1. An implement for automatically milking animals, such as cows, comprising a milking robot including a robot arm (14), which is adapted to carry teat cups (21), and a milkmeter, **characterized in that** the milkmeter is rigidly connected with the robot arm (14).

2. An implement as claimed in claim 1, **characterized in that** there is provided a milk buffer vessel (56) which is rigidly connected with the robot arm (14), and in the milk line (39) between a teat cup (21) and the milk buffer vessel (56) there is provided a flow milkmeter (57) which is rigidly connected with the robot arm (14).

3. An implement as claimed in claim 1 or 2, **characterized in that** the implement comprises a sidewards pivotable part of the milk box in order to obtain more leg room at one side of the implement.

4. An implement as claimed in any one of the preceding claims, **characterized in that** the implement comprises a sidewards in the milk box located hinge on which at least a part of the teat cups (21) can be mounted.

5. An implement as claimed in any one of the preceding claims, **characterized in that** a part of the implement carrying the teat cups (21) is during operation hingeably connected to the implement having a movement similar to the pendulum of a clock.

6. An implement as claimed in any one of the preceding claims, **characterized in that** the detector (22) comprises a laser detector.

## Patentansprüche

1. Vorrichtung zum automatischen Melken von Tieren, wie z. B. Kühen, die einen Melkroboter mit einem Roboterarm (14), der geeignet ist, Zitzenbecher (21) zu tragen, sowie einen Milchmengenmesser umfaßt,
**dadurch gekennzeichnet, daß** der Milchmengenmesser mit dem Roboterarm (14) starr verbunden ist.

2. Vorrichtung nach Anspruch 1,
**dadurch gekennzeichnet, daß** ein Milchpufferbehälter (56) vorhanden ist, der mit dem Roboterarm (14) starr verbunden ist, und daß in der Milchleitung (39) zwischen einem Zitzenbecher (21) und dem Milchpufferbehälter (56) ein Milchdurchflußmesser (57) angeordnet ist, der mit dem Roboterarm (14) starr verbunden ist.

3. Vorrichtung nach Anspruch 1 oder 2,
**dadurch gekennzeichnet, daß** die Vorrichtung einen seitwärts schwenkbaren Teil der Melkbox umfaßt, um auf einer Seite der Vorrichtung mehr Fußraum zu schaffen.

4. Vorrichtung nach einem der vorhergehenden Ansprüche,
**dadurch gekennzeichnet, daß** die Vorrichtung ein in der Melkbox seitlich angeordnetes Gelenk umfaßt, an dem zumindest ein Teil der Zitzenbecher (21) angebracht werden kann.

5. Vorrichtung nach einem der vorhergehenden Ansprüche,
**dadurch gekennzeichnet, daß** ein die Zitzenbecher (21) tragender Teil der Vorrichtung im Betrieb schwenkbar mit der Vorrichtung verbunden ist und eine dem Pendel einer Uhr ähnelnde Bewegung ausführt.

6. Vorrichtung nach einem der vorhergehenden Ansprüche,
**dadurch gekennzeichnet, daß** der Detektor (22) einen Laserdetektor umfaßt.

## Revendications

1. Appareil pour la traite automatique d'animaux, tels que des vaches, comprenant un robot de traite comprenant un bras de robot (14), qui est adapté pour supporter des gobelets trayeurs (21), et un compteur à lait, **caractérisé en ce que** le compteur à lait est relié de manière rigide au bras de robot (14).

2. Appareil selon la revendication 1, **caractérisé en ce qu'**une cuve tampon de lait (56) est prévue, laquelle est reliée de manière rigide au bras de robot (14), et dans la ligne de lait (39) entre un gobelet trayeur (21) et la cuve tampon de lait (56), un dispositif de mesure de débit de lait (57) est relié de manière rigide au bras de robot (14).

3. Appareil selon la revendication 1 ou 2, **caractérisé en ce que** l'appareil comprend une partie de la stalle de traite capable de pivoter latéralement afin d'obtenir plus de place pour les pattes d'un côté de l'appareil.

4. Appareil selon l'une quelconque des revendications précédentes, **caractérisé en ce que** l'appareil comprend une articulation située latéralement dans la stalle de traite sur laquelle au moins une partie des gobelets trayeurs (21) peuvent être montés.

5. Appareil selon l'une quelconque des revendications précédentes, **caractérisé en ce qu'**une partie de l'appareil supportant les gobelets trayeurs (21) est reliée, en fonctionnement, de manière articulée à l'appareil, ayant un mouvement similaire à celui du balancier d'une horloge.

6. Appareil selon l'une quelconque des revendications précédentes, **caractérisé en ce que** le capteur (22) comprend un capteur laser.
